# EUROPÄISCHE PATENTSCHRIFT

(11) **EP 3 587 837 B1**
(45) Veröffentlichungstag und Bekanntmachung des Hinweises auf die Patenterteilung: **09.12.2020**
(21) Anmeldenummer: 19175172.6
(22) Anmeldetag: 17.05.2019
(51) Int. Cl.: F16B 13/06

(54) **DÜBEL MIT UMFÄNGLICH BÜNDIG ANEINANDER ANLIEGENDEN, GETRENNTEN SPREIZSTEGEN**
DOWEL WITH PERIPHERALLY ABUTTING SEPARATE EXPANDING BARS
GOUJON POURVU DE BRIDES EXPANSIBLES SÉPARÉES DISPOSÉES LES UNES SUR LES AUTRES CIRCONFÉRENTIELLEMENT EN AFFLEUREMENT

(30) Priorität: 29.06.2018 DE 102018115861
(43) Veröffentlichungstag der Anmeldung: 01.01.2020
(73) Patentinhaber: Adolf Würth GmbH & Co. KG, 74653 Künzelsau (DE); Würth International AG, 7000 Chur (CH)
(72) Erfinder: Wieland, Achim, 74211 Leingarten (DE)
(74) Vertreter: Dilg, Haeusler, Schindelmann Patentanwaltsgesellschaft mbH

(56) Entgegenhaltungen:
- EP-A1- 1 701 046
- DE-A1- 10 045 650

## Beschreibung

Die Erfindung betrifft einen Dübel, ein Verfahren zum Herstellen eines Dübels, ein Montagekit, eine Montageanordnung und ein Verfahren zum Montieren eines Dübels.

Ein Dübel ist ein in der Verbindungstechnik gebrauchtes Bauteil. Er wird bei Werkstoffen angewendet, in die sich eine Schraube nicht unmittelbar eindrehen lässt. Dübel werden in ein zylindrisches Loch in gemauerte, betonierte oder mit Platten versehene Wände, Decken oder Böden als Zwischenteil eingesetzt. Beim Eindrehen der Schraube spreizt sich der Dübel. Durch Kraftschluss zwischen Dübel und umgebendem Material und manchmal mit Formschluss ist die Schraube gegen Herausziehen gesichert.

DE 10 2013 107075 A1 und DE 10 2013 107079 A1 offenbaren Dübel aus zwei Kunststoffen.

Wenngleich herkömmliche Dübel für verschiedene Anwendungen sehr leistungsstark sind, kann es in einigen Fällen zu einer unzureichenden Verankerungskraft kommen.

Es ist eine Aufgabe der vorliegenden Erfindung, einen Dübel bereitzustellen, der in einen Untergrund mit einer hohen Verankerungskraft gesetzt werden kann.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Ausführungsbeispiel der vorliegenden Erfindung ist ein Dübel geschaffen, der einen Fuß mit einer Öffnung zum Einführen eines Befestigungselements (insbesondere einer Schraube oder eines Bolzens), einen Kopf und einen Spreizbereich (insbesondere einen Bereich des Dübels, der bei Einbringen eines Befestigungselements eine Aufspreizung erfährt) zwischen dem Fuß und dem Kopf mit einer Mehrzahl von in Umfangsrichtung bündig aneinander anliegenden (insbesondere abstandsfrei oder ohne Zwischenraum aneinander anliegenden und einander daher berührenden), aber getrennten (insbesondere ohne feste Verbindung an einer Berührfläche und somit als separate Körper ausgebildeten) Spreizstegen (insbesondere langgestreckte Körper oder Materialabschnitte, die bei Einführen eines Befestigungselements in die Öffnung des Dübels eine seitliche Spreizbewegung vollführen können) aufweist.

Gemäß einem anderen Ausführungsbeispiel der vorliegenden Erfindung ist ein Verfahren zum Herstellen eines Dübels bereitgestellt, wobei das Verfahren ein Bilden eines Fußes mit einer Öffnung zum Einführen eines Befestigungselements, ein Bilden eines Kopfs und ein Bilden eines Spreizbereichs zwischen dem Fuß und dem Kopf mit einer Mehrzahl von in Umfangsrichtung bündig aneinander anliegenden, aber getrennten Spreizstegen aufweist.

Gemäß noch einem anderen Ausführungsbeispiel der vorliegenden Erfindung ist ein Verfahren zum Montieren eines Dübels mit den oben beschriebenen Merkmalen in einem Untergrund (genauer gesagt in einer Aufnahmeöffnung eines Untergrunds, zum Beispiel ein Bohrloch) bereitgestellt, wobei das Verfahren, wenn der Untergrund ein Vollkörper ist, ein vollumfängliches Aufspreizen der Spreizstege (insbesondere ein radial nach außen gerichtetes Aufspreizen der Spreizstege gegen eine Wandung des Untergrunds im Wesentlichen ohne in Umfangsrichtung spreizstegfreie Zwischenräume) des Dübels, und wenn der Untergrund ein Hohlkörper ist, ein Verknoten der Spreizstege (insbesondere ein gegenseitiges Umschlingen unterschiedlicher Spreizstege unter Bildung eines das Befestigungselement zumindest teilumfänglich umgreifenden Knäuels der Spreizstege) des Dübels in einem Hohlraum des Hohlkörpers aufweist.

Gemäß noch einem anderen Ausführungsbeispiel der vorliegenden Erfindung ist ein Montagekit geschaffen, das einen Dübel mit den oben beschriebenen Merkmalen und ein Befestigungselement (insbesondere eine Schraube oder einen Bolzen) zum Einführen in den Dübel aufweist.

Gemäß noch einem anderen Ausführungsbeispiel der vorliegenden Erfindung ist eine Montageanordnung bereitgestellt, die ein Montagekit mit den oben beschriebenen Merkmalen und einen Untergrund aufweist, wobei der Dübel in den Untergrund eingeführt ist und das Befestigungselement in den Dübel eingeführt ist.

Im Rahmen dieser Anmeldung kann unter dem Begriff "Untergrund" insbesondere ein zum Verankern des Dübels und des Befestigungselements geeigneter Körper verstanden werden. Ein solcher Untergrund oder Verankerungsgrund kann insbesondere eine Wand, weiter insbesondere eine vertikale Wand, sein. Materialien für einen solchen Untergrund sind insbesondere Holz oder Holzbaustoffe, oder aber auch Beton- und Mauerwerksbaustoffe, Metall, Gipskarton oder Kunststoffbauteile. Ferner kann ein solcher Untergrund auch ein beliebiger Kompositwerkstoff aus mehreren unterschiedlichen Materialkomponenten sein.

Im Rahmen dieser Anmeldung kann unter dem Begriff "Vollkörper" insbesondere ein Untergrund verstanden werden, der - von einer Aufnahmeöffnung (zum Beispiel ein Bohrloch) zum Aufnehmen des Dübels abgesehen - von Hohlkammern frei oder im Wesentlichen frei ist. Hohlkammern in diesem Sinne können insbesondere materialfreie Bereiche (oder Bereiche sehr geringer Dichte, zum Beispiel Ausschäumungen) im Inneren des Untergrunds sein.

Im Rahmen dieser Anmeldung kann unter dem Begriff "Hohlkörper" insbesondere ein Untergrund verstanden werden, der im Inneren (insbesondere in einem Eindringbereich des Dübels und des Befestigungselements in den Untergrund) - zusätzlich zu einer Aufnahmeöffnung (zum Beispiel ein Bohrloch) zum Aufnehmen des Dübels - Hohlkammern, das heißt materialfreie Bereiche, aufweist (oder in für die Befestigungswirkung signifikantem Maße aufweist). Ein solcher Hohlkörper kann eine reguläre Anordnung von Hohlkammern enthalten, beispielsweise gezielt vorgesehene Löcher in einem Ziegel. Auch ein poröser Körper kann als Hohlkörper angesehen werden. Konkrete Beispiele für Hohlkörper sind Hochlochziegelsteine oder poriger Leichtbeton. Auch eine Platte (zum Beispiel eine Gipsplatte), hinter der ein Hohlraum angeordnet ist, kann einen solchen Hohlkörper bilden. Gemäß einen exemplarischen Ausführungsbeispiel der Erfindung soll der Hohlkörper mindestens eine Kammer aufweisen, in der sich der Dübel verknoten kann.

Gemäß einem exemplarischen Ausführungsbeispiel der Erfindung ist ein Dübel geschaffen, bei dem voneinander separat ausgebildete Spreizstege in Umfangsrichtung direkt und ohne Zwischenraum aneinander anliegen. Aneinander unmittelbar angrenzende Spreizstege eines solchen Dübels können somit mechanisch unverbunden sein, aber aneinander anstoßen oder unmittelbar angrenzen. Auf diese Weise ist es einerseits möglich, dass jeder der Spreizstege jeweils unabhängig von anderen Spreizstegen bei Einführen eines Befestigungselements in die Öffnung des Dübels aufspreizen kann und dadurch zu einer festen Verankerung des Dübels in einem Bohrloch oder dergleichen in dem Untergrund beitragen kann. Durch das einander berührende Anordnen der Spreizstege ohne Zwischenräume in einem Zustand des Dübels vor Einbringen des Befestigungselements ist sichergestellt, dass der Dübel in Umfangsrichtung zwischen einander benachbarten Spreizelementen keine nennenswerten Zwischenräume ohne Befestigungswirkung aufweist. Auf diese Weise sind eine besonders sichere Verankerung des Dübels in einem Aufnahmeloch des Untergrunds und eine hohe Auszugskraft sichergestellt.

Gemäß einem anderen Ausführungsbeispiel kann der beschriebene Dübel mit Vorteil sowohl in einem Vollkörperuntergrund (zum Beispiel Vollbeton) als auch in einem Hohlkörperuntergrund (zum Beispiel an einer Holz- oder Gipsplatte mit einem Hohlraum dahinter) mit hohen Auszugskräften montiert werden. Im Falle eines Vollkörpers als Untergrund können sich die Spreizstege insbesondere im Wesentlichen vollumfänglich gegen ein Aufnahmeloch in einem solchen Untergrund verspreizen und dadurch für eine sichere Verankerung des Dübels in dem Untergrund sorgen. Wird hingegen der Dübel an einem Hohlkörper als Untergrund montiert, können sich die in Umfangsrichtung voneinander abstandsfrei vorgesehenen Spreizstege bei Einbringen des Dübels in ein Durchgangsloch des Untergrunds mit dahinterliegendem Hohlraum und bei nachfolgendem (insbesondere drehenden) Einführen eines Befestigungselements in die Öffnung des Dübels die Spreizstege in dem Hohlraum verknoten und sich dabei sowohl um das Befestigungselement herumlegen als auch sich in dem Hohlraum an Material des Untergrunds (zum Beispiel an einer Rückfläche einer Platte) anlegen. Anschaulich können sich die abstandsfrei angeordneten, aber separaten Spreizelemente beim Eindrehen einer Schraube als Befestigungselement in den Dübel alle in die gleiche Richtung drehen und sich daher zum Beispiel hinter einer Deckplatte des Hohlraum aufweisenden Untergrunds aufwickeln. Auf diese Weise ist ein für verschiedenste Untergründe universal einsetzbarer Dübel mit starker Verankerungskraft und hohen Auszugswerten geschaffen.

Im Weiteren werden zusätzliche Ausführungsbeispiele des Dübels, des Montagekits, der Montageanordnung und der Verfahren beschrieben.

Gemäß einem Ausführungsbeispiel können die Spreizstege erste Spreizstege und zweite Spreizstege aufweisen. Die ersten Spreizstege können am Fuß und/oder am Kopf des Dübels miteinander verbunden sein. Alternativ oder ergänzend können die zweiten Spreizstege am Fuß und/oder am Kopf des Dübels miteinander verbunden sein. Durch das Verbinden der Gruppe der ersten Spreizstege miteinander bzw. der Gruppe der zweiten Spreizstege miteinander - vorzugsweise am Kopf und am Fuß - kann ein mechanisch besonders stabiler Dübel geschaffen werden, der auch im aufgespreizten Zustand mechanisch intakt bleibt. Die gruppenweise Verbindung der ersten Spreizstege bzw. der zweiten Spreizstege am Kopf bzw. Fuß des Dübels kann zum Beispiel stoffschlüssig erfolgen, indem die genannten Strukturen integral ausgebildet werden (zum Beispiel mittels Spritzgießens). Auch eine chemische Verbindung der jeweiligen Gruppe von Spreizstegen am Kopf und/oder Fuß ist möglich. Alternativ oder ergänzend können die Spreizstege der jeweiligen Gruppe am Kopf und/oder Fuß auch mittels einer mechanischen Verzahnung unter Ausbildung eines Formschlusses miteinander verbunden werden.

Gemäß einem Ausführungsbeispiel können die ersten Spreizstege nicht (insbesondere nicht direkt bzw. nicht unmittelbar) mit den zweiten Spreizstegen verbunden sein. Anders ausgedrückt können die ersten Spreizstege im Verhältnis zu den zweiten Spreizstegen unverbunden sein. Dies ermöglicht es, die ersten Spreizstege und die zweiten Spreizstege funktional voneinander zu trennen und auch in unterschiedlicher Weise auszugestalten. Dies kann zum Beispiel dadurch erreicht werden, dass die ersten Spreizstege als Teil eines Rohlings (zum Beispiel einer ersten Spritzgusskomponente) geformt werden und nachfolgend verbleibende Leerräume unter Erzeugung der zweiten Spreizstege mit Material ausgefüllt werden (zum Beispiel unter Generierung einer zweiten Spritzgusskomponente) bzw. Teilbereiche des Rohlings überspitzt werden. Durch dieses zwei- (oder mehr-) stufige Herstellungsverfahren kann sowohl das zueinander bündige Anordnen der ersten und zweiten Spreizstege als auch das getrennte Ausbilden der ersten und zweiten Spreizstege erreicht werden.

Gemäß einem Ausführungsbeispiel können die ersten Spreizstege und die zweiten Spreizstege aus unterschiedlichen Materialien oder aus dem gleichen Material hergestellt sein. Wenn die ersten Spreizstege und die zweiten Spreizstege aus unterschiedlichen Materialien hergestellt sind, kann die jeweilige Materialwahl in Einklang mit der jeweiligen Funktion der ersten Spreizstege bzw. der zweiten Spreizstege erfolgen. Wenn die ersten Spreizstege und die zweiten Spreizstege aus demselben Material hergestellt sind, können gegebenenfalls unerwünschte Materialbrücken vermieden und etwaige Probleme mit unterschiedlichen Wärmeausdehnungskoeffizienten und dergleichen vermieden werden.

Gemäß einem Ausführungsbeispiel können die ersten Spreizstege und die zweiten Spreizstege in Umfangsrichtung alternierend angeordnet sein. Mit anderen Worten können sich in Umfangsrichtung jeweils ein erster Spreizsteg und ein zweiter Spreizsteg abwechseln. Dadurch ist eine sehr homogene Krafteinleitung von dem Dübel in den Untergrund ermöglicht.

Gemäß einem Ausführungsbeispiel können die ersten Spreizstege und die zweiten Spreizstege zueinander formschlüssig ausgebildet sein. Eine Außenfläche des Spreizbereichs kann dann vorzugsweise vollständig geschlossen bzw. lückenfrei sein. Insbesondere können Teile der ersten Spreizstege in Ausnehmungen einer Struktur eingepasst sein, die von den zweiten Spreizstegen und gegebenenfalls diese verbindenden Verbindungsstrukturen gebildet sind. Auf diese Weise ist ein leicht handhabbarer und kompakter Dübel mit universeller Einsetzbarkeit in unterschiedlichen Untergründen geschaffen.

Gemäß einem Ausführungsbeispiel können die ersten Spreizstege dünner (oder nur teilweise dünner, insbesondere zur Erhaltung von Flexibilität) und aus einem festeren Material als die zweiten Spreizstege ausgebildet sein. Die dünnere Ausbildung der ersten Spreizstege kann sich hierbei insbesondere auf die Umfangsrichtung des Dübels beziehen. Alternativ können die zweiten Spreizstege dünner und aus einem festeren Material als die ersten Spreizstege ausgebildet sein. Die Festigkeit kann sich zum Beispiel auf eine Shore-Härte, eine Bruchdehnung oder eine Schlagzähigkeit beziehen. Auf diese Weise kann bei einem jeweiligen Spreizsteg eine räumlich kompakte Ausgestaltung durch Verwendung eines robusteren Materials ausgeglichen werden.

Gemäß einem Ausführungsbeispiel kann das festere Material ein Hartkunststoff oder ein faserverstärkter Kunststoff sein. Zum Beispiel kann ein Hartkunststoff eine höhere Shore-Härte, eine höhere Bruchdehnung und/oder eine höhere Schlagzähigkeit haben als Polyethylen.

Gemäß einem Ausführungsbeispiel kann das weniger feste Material ein Weichkunststoff sein. Ein solcher Weichkunststoff kann zum Beispiel Polyethylen sein.

Gemäß einem Ausführungsbeispiel können die ersten Spreizstege und die zweiten Spreizstege eine unterschiedliche Flexibilität (oder eine unterschiedliche Rigidität) oder eine unterschiedliche Elastizität (d.h. ein unterschiedliches Elastizitätsmodul) aufweisen. Zum Beispiel können die ersten Spreizstege mechanisch flexibel oder elastisch und die zweiten Spreizstege rigide ausgebildet sein, oder umgekehrt. Auf diese Weise können die Eigenschaften des Dübels auf eine bestimmte Applikation hin angepasst werden.

Gemäß einem Ausführungsbeispiel können die ersten Spreizstege zumindest abschnittsweise von einer zusammenhängenden Matrix umfänglich umgeben sein, welche Matrix auch die zweiten Spreizstege aufweist. Anders ausgedrückt können die ersten Spreizstege in eine zusammenhängende Matrix, welche auch die zweiten Spreizstege umfasst, eingebettet sein. Eine solche zusammenhängende Matrix oder zusammenhängende Struktur kann zum Beispiel die Verbindung der zweiten Spreizstege am Kopf und/oder Fuß des Dübels bewerkstelligen. Die Matrix kann durch eine Spritzgussprozedur hergestellt werden. Mittels einer anderen Spritzgussprozedur können Aussparungen der Matrix unter Bildung der ersten Spreizstege gefüllt werden.

Gemäß einem Ausführungsbeispiel kann der Dübel als Kunststoffdübel ausgebildet sein. Insbesondere kann der Dübel nur aus Kunststoff bestehen. Dies ermöglicht eine wenig aufwendige Fertigung (zum Beispiel mittels Spritzgießens), die angesichts des vollumfänglichen Vorsehens der Spreizstege mit einer hohen Verankerungskraft des Dübels in einem Untergrund kombiniert werden kann.

Gemäß einem Ausführungsbeispiel können die ersten Spreizstege und die zweiten Spreizstege miteinander verzahnt sein. Durch eine gegenseitige Verzahnung der als separate Körper ausgebildeten, aber miteinander in Berührkontakt stehenden ersten und zweiten Spreizstege kann sowohl die Kontaktfläche zwischen benachbarten Spreizstegen erhöht als auch eine formschlüssige Kopplung der einander berührenden Spreizstege ermöglicht werden. Zum Beispiel können Zahnstrukturen in Umfangsrichtung der ersten Spreizstege ausgebildet werden, die mit invers geformten Zahnstrukturen entlang von Seiten der zweiten Spreizstege in Eingriff sind.

Gemäß einem Ausführungsbeispiel kann zumindest ein Teil der Spreizstege in Axial- oder Setzrichtung des Dübels alternierend breitere Abschnitte und schmälere Abschnitte aufweisen. Die abwechselnd breiteren und schmäleren Abschnitte der Spreizstege können durch die oben beschriebenen Zahnstrukturen gebildet sein.

Gemäß einem Ausführungsbeispiel kann der Spreizbereich in Umfangsrichtung spaltfrei geschlossen sein. Anschaulich weist gemäß der beschriebenen Ausführungsform der Spreizbereich keine Schlitze zwischen Spreizstegen auf und ist daher (zumindest im Wesentlichen) vollumfänglich geschlossen. Gemäß einem solchen bevorzugten Ausführungsbeispiel kann der Dübel entlang seines gesamten Umfangs oder zumindest im Wesentlichen entlang seines gesamten Umfangs von Zwischenräumen frei sein, bevor das Befestigungselement in die Öffnung des Dübels eingeführt wird. Auf diese Weise ist es möglich, mittels der Spreizstege entlang des gesamten Umfangs des Dübels eine im Wesentlichen gleiche radial nach außen gerichtete Befestigungskraft auf einen Untergrund auszuüben, in den der Dübel samt Befestigungselement eingeführt ist. Wenn der gesamte (oder im Wesentlichen der gesamte) Umfang des Dübels mit Kunststoff gefüllt ist, kann durch Vermeiden größerer Luftlöcher zwischen benachbarten Spreizstegen auch ein unerwünschter Verlust an Haltekraft vermieden werden.

Gemäß einem Ausführungsbeispiel können die Spreizstege ausgebildet sein, bei Einführen eines Befestigungselements in den, in einen als Vollkörper ausgebildeten Untergrund eingeführten Dübel gemeinsam aufzuspreizen. Wird also zum Beispiel eine Schraube in die Öffnung des Dübels eingedreht, der in ein Sackloch oder Durchgangsloch des Vollkörpers eingeführt ist, übt die Schraube (oder ein anderes Befestigungselement) eine radial nach außen gerichtete Kraft auf die in Umfangsrichtung spaltfrei einander berührend und aneinander angestückten Spreizstege aus und verspreizt diese gegen den Untergrund. Auf diese Weise ist eine sehr zuverlässige Verankerung von Dübel und Befestigungselement in dem Vollkörper sichergestellt, da in Umfangsrichtung im Wesentlichen durchgehend eine Übertragung einer radial nach außen gerichteten Befestigungskraft von dem Dübel auf den Untergrund erfolgt.

Gemäß einem Ausführungsbeispiel können die Spreizstege ausgebildet sein, bei Einführen eines Befestigungselements in den, in einen als Hohlkörper ausgebildeten Untergrund eingeführten Dübel miteinander zu verknoten. Dieselben Spreizstege, die bei Einführen des Dübels in einen als Vollkörper ausgebildeten Untergrund eine nach außen gerichtete vollumfängliche Verspreizung ermöglichen, können bei alternativem Einführen des Dübels in einen als Hohlkörper ausgebildeten Untergrund durch eine Setzkraft des Befestigungselements vom Kopf des Dübels gelöst oder abgetrennt werden und dann (insbesondere bei Einwirken eines Drehmoments infolge des Einbringens des als Schraube ausgebildeten Befestigungselements in den Dübel) eine verdrillende Verknotung miteinander erfahren. Anschaulich können freie Enden der von dem Kopf gelösten bzw. abgetrennten ersten und zweiten Spreizstege unter dem Einfluss eines Drehmoments oder einer anderen geeigneten Kraft miteinander verhaken und dann eine Knotenstruktur in dem Hohlraum (zum Beispiel an einer Rückwand einer den Hohlraum begrenzenden Platte) ausbilden.

Gemäß einem Ausführungsbeispiel des Dübels kann der Kopf vor Einbringen des Befestigungselements in den Dübel geschlossen sein. Anschaulich kann der Kopf als geschlossene Kappe ausgebildet sein, die im montierten Zustand des Dübels im Bohrlochtiefsten angeordnet sein kann. Auf diese Weise kann vermieden werden, dass Bohrmehl, Schmutz, etc. in die Öffnung des Dübels zum Aufnehmen des Befestigungselements eindringt.

Gemäß einem Ausführungsbeispiel kann der Kopf eine Sollbruchstelle aufweisen, die bei Einbringen eines Befestigungselements in den Dübel unter Öffnung des Kopfes aufgebrochen werden kann bzw. aufzubrechen ist. Zum Beispiel kann in einer Stirnfläche des Kopfs eine (beispielsweise kreuzförmige) Opferstruktur integriert werden, die an der (zum Beispiel umlaufenden) Sollbruchstelle vom Rest des beispielsweise kappenförmigen Kopfes umgeben ist. Beispielsweise ist es möglich, einen Kappenbereich des Kopfes gemeinsam mit einer Matrix auszubilden, die auch die zweiten Spreizstege und deren kopfseitige bzw. fußseitige Verbindungsstrukturen enthält. Die durch die Sollbruchstelle von der Matrix getrennte Opferstruktur kann dann zum Beispiel gemeinsam mit den ersten Spreizstegen geformt werden.

Gemäß einem Ausführungsbeispiel kann der Kopf Dehnungsfugen aufweisen, die ganz oder teilweise mit Rippen gefüllt sind. Die Dehnungsfugen können Aussparungen in der Matrix sein, wohingegen die Rippen gemeinsam mit den ersten Spreizstegen gebildet werden können. Das Zusammenspiel der Dehnungsfugen mit den Rippen bewirkt, dass das Befestigungselement leicht in die Öffnung des Dübels eingeführt werden kann und eine wirksame radiale Aufspreizung der Spreizstege bewerkstelligen kann.

Gemäß einem Ausführungsbeispiel kann zumindest ein Teil der Dehnungsfugen eine von 90° zu einer Axialrichtung des Dübels abweichende Schrägwinkelstellung aufweisen. Durch die Schrägstellung von Dehnungsfugen und zugehörigen Rippen kann eine gewünschte Aufweitung des Durchmessers ermöglicht werden, wenn das Befestigungselement in die Öffnung des Dübels eingeführt wird.

Gemäß einem Ausführungsbeispiel kann der Fuß eine Mitdrehsicherung aufweisen, insbesondere ausgebildet als in Umfangsrichtung außenseitig verteilt angeordnete und radial nach außen überstehende Dorne. Eine solche Mitdrehsicherung verunmöglicht oder unterdrückt, dass sich der Dübel unerwünscht mitdreht, wenn ein zum Beispiel als Schraube ausgebildetes Befestigungselement in die Öffnung des Dübels eingedreht wird. Dadurch kann ein durch ein unerwünschtes Mitdrehen des Dübels beim Setzen des Befestigungselements einhergehender Verlust an Befestigungskraft des Dübels in dem Untergrund vermieden werden.

Gemäß einem Ausführungsbeispiel kann zumindest im Spreizbereich ein Aufnahmekanal (der die axiale Fortsetzung der Öffnung des Dübels im Inneren des Dübels darstellt) zum Aufnehmen eines Befestigungselements im Inneren des Dübels mehrere innenseitig hineinragende Überstände aufweisen, die als innenseitige Endbereiche von zumindest einem Teil der (insbesondere ersten) Spreizelemente ausgebildet sein können. Insbesondere können die innenseitigen Überstände (insbesondere ausschließlich) durch die ersten Spreizstege gebildet sein. Ein Einführen des Befestigungselements in die Öffnung bzw. den Aufnahmekanal des Dübels führt dann zunächst zu einem Aufspreizen der ersten Spreizstege. Die zweiten Spreizstege können bei der radial nach außen gerichteten Bewegung der ersten Spreizstege reibschlüssig mitgenommen werden bzw. können bei fortgesetztem Einführen des Befestigungselements nach außen aufgespreizt werden.

Gemäß einem Ausführungsbeispiel können der Kopf und/oder der Fuß ausgebildet sein, dass dort im Betrieb keine Spreizung erfolgt. Die beiden einander gegenüberliegenden Endbereiche des Dübels, die Fuß und Kopf bilden, können somit der Stabilität dienen, wohingegen ein dazwischen angeordneter Mittenbereich die Spreizfunktion des Dübels verwirklicht.

Gemäß einem Ausführungsbeispiel kann das Verfahren ein Herstellen der Spreizstege aufweisen, bei dem zunächst erste Spreizstege gebildet werden und erst nachfolgend zweite Spreizstege gebildet werden. Zum Beispiel können die ersten Spreizstege als Rohling oder Teil eines Rohlings gebildet werden, dessen Zwischenräume dann durch Material der zweiten Spreizstege ausgefüllt werden können. Auf diese Weise können Bereiche des Dübels, die herkömmlich materialfrei sind, durch zusätzliche Spreizelemente, Spreizschenkel oder Spreizstege ausgefüllt werden, wodurch eine Befestigungskraft des Dübels in einem Untergrund erhöht werden kann.

Gemäß einem Ausführungsbeispiel können bei dem Verfahren die ersten Spreizstege mittels eines ersten Spritzgussverfahrens und nachfolgend die zweiten Spreizstege mittels eines nachfolgenden zweiten Spritzgussverfahrens hergestellt werden. Zwei aufeinanderfolgende Spritzgussverfahren sind besonders gut geeignet, den Spreizbereich mit in Umfangsrichtung bündig aneinander anliegenden, aber getrennten Spreizstegen herzustellen.

Gemäß einem Ausführungsbeispiel können bei dem Verfahren die ersten Spreizstege mittels eines ersten Werkzeugs (insbesondere mittels eines ersten Spritzgusswerkzeugs) und nachfolgend die zweiten Spreizstege mittels eines anderen zweiten Werkzeugs (insbesondere mittels eines zweiten Spritzgusswerkzeugs) hergestellt werden. Es können also zwei unterschiedliche Spritzgusswerkzeuge zum Einsatz kommen, deren jeweilige Formgebung durch die durch sie auszubildenden Strukturmerkmale des Dübels festgelegt ist.

Gemäß einem Ausführungsbeispiel kann ein Einbringen des Dübels und nachfolgend des Befestigungselements in den Untergrund nach Bilden einer Vorbohrung in dem Untergrund erfolgen. Eine solche Vorbohrung in einem Untergrund, der als Vollkörper ausgebildet ist, kann ein Sackloch sein. In einem Untergrund, der als Hohlkörper ausgebildet ist, kann die Vorbohrung ein Durchgangsloch sein, das sich bis in mindestens einen ersten Hohlraum hinein erstreckt.

Im Folgenden werden exemplarische Ausführungsbeispiele der vorliegenden Erfindung mit Verweis auf die folgenden Figuren detailliert beschrieben.
Figur 1 zeigt eine dreidimensionale Ansicht eines Dübels gemäß einem exemplarischen Ausführungsbeispiel der Erfindung.
Figur 2 zeigt eine erste Spritzgusskomponente des Dübels gemäß Figur 1.
Figur 3 zeigt eine zweite Spritzgusskomponente des Dübels gemäß Figur 1.
Figur 4 zeigt eine Seitenansicht des Dübels gemäß Figur 1.
Figur 5 zeigt eine Schnittansicht des Dübels gemäß Figur 1 bis Figur 4 entlang einer in Figur 4 dargestellten Schnittebene A-A.
Figur 6 zeigt eine Schnittansicht des Dübels gemäß Figur 1 bis Figur 4 entlang einer in Figur 4 dargestellten Schnittebene B-B.
Figur 7 zeigt eine Schnittansicht des Dübels gemäß Figur 1 bis Figur 4 entlang einer in Figur 4 dargestellten Schnittebene C-C.
Figur 8 zeigt eine räumliche Ansicht in ein Inneres des Dübels gemäß Figur 1 bis Figur 7.
Figur 9 zeigt einen Dübel, bei dem Spreizstege in einem als Vollkörper ausgebildeten Untergrund aufgespreizt sind.
Figur 10 zeigt den Dübel gemäß Figur 9, bei dem die Spreizstege in einem als Hohlkörper ausgebildeten Untergrund verknotet sind.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung können Spreizstege eines Dübels mittels Zweikomponenten-Spritzguss hergestellt werden, sodass diese in Umfangsrichtung bündig aneinander anliegen, aber separate Körper bleiben. Hierbei kann zunächst eine erste Komponente in einem Spritzgusswerkzeug gespritzt werden und dann die zweite Komponente unter Verwendung eines zweiten, anderen Spritzgusswerkzeugeinsatzes hinzugefügt werden. Dadurch können getrennte erste und zweite Spreizstege bündig aneinander gefertigt werden.

Hierbei ist es möglich, Spreizstege aus unterschiedlichen Materialien an Enden zum Beispiel chemisch zu verbinden und/oder durch eine mechanische Verzahnung untereinander zu verhaken.

Die Spreizstege können durch das Fertigungsverfahren konstruktiv auf einen jeweiligen Kunststoff angepasst werden, der zur Fertigung der ersten Komponente bzw. der zweiten Komponente verwendet werden kann. Zum Beispiel kann ein dünner flexibler Spreizsteg aus hartem Kunststoff gefertigt werden, wohingegen ein dicker und steifer Spreizsteg aus weichem Kunststoff gefertigt werden kann. Insbesondere können dünnere Spreizstege gemäß exemplarischen Ausführungsbeispielen der Erfindung aus einem harten oder glasfaserverstärkten Kunststoff gefertigt werden. Hierbei können zum Beispiel teilweise größere Flächen gefertigt werden, die einen größeren Spreizdruck erzeugen. Eine Flexibilität kann durch dünnere Teilstücke als Anbindungen gewährleistet werden. Eine solche Konfiguration kann zum Beispiel durch eine entsprechende Ausgestaltung von Schiebern eines Spritzgusswerkzeugs erhalten werden. Breitere Stege können aufgrund des größeren Querschnitts schwerer verdrehbar sein, weshalb dafür ein weicher Kunststoff (wie zum Beispiel Polyethylen) verwendet werden kann. Spreizstege unterschiedlicher oder gleicher Festigkeit können umlaufend versetzt angeordnet und an den Enden über die Konstruktion miteinander verbunden werden.

Gemäß einem Ausführungsbeispiel der Erfindung sind die Spreizstege nicht gerade ausgeführt, sondern können über eine Verzahnung (zum Beispiel entsprechend einem Winkel von 45°) aneinander anliegen. Beim Verdrehen des Dübels kann dann anschaulich eine axiale Verschiebung bzw. Dehnung der Spreizstege untereinander erfolgen. Wegen der (zum Beispiel mit einem Winkel von 45° ausgebildeten) Verzahnung entsteht auch eine Aufweitung oder Vergrößerung des Abstands der Spreizstege zueinander. Dadurch kann ein Knoten, der bei Setzen des Dübels in einen als Hohlkörper ausgebildeten Untergrund in dem Hohlkörper durch die miteinander wechselwirkenden Spreizstege erzeugt werden kann, im Volumen größer werden. Dies kann eine größere Abstützfläche und somit höhere Auszugskräfte bei der Befestigung in Untergründen mit Hohlraum (zum Beispiel Plattenmaterialien) bewirken.

Aufgrund des beschriebenen Herstellungsverfahrens können gemäß einem exemplarischen Ausführungsbeispiel der Erfindung die Spreizstege auch um einen vorgebbaren Winkel (bevorzugt 90°) verdreht um einen Kern angeordnet werden. Somit ist die Verknotungsrichtung vorgegeben und erleichtert. Bevorzugt kopf- und fußseitig unbefestigte erste Spreizstege (wobei zum Beispiel vier erste Spreizstege vorgesehen sein können), die mit Vorteil dübelinnenseitige Überstände aufweisen können, bewirken einen frühzeitigen Beginn des Spreizvorgangs beim Einführen eines Befestigungselements in eine Öffnung des Dübels. Von vorne nach hinten durchgehende zweite Spreizstege (wobei zum Beispiel vier zweite Spreizstege vorgesehen sein können) fördern eine präzise Zentrierung eines Befestigungselements (insbesondere einer Schraube). Eine Sollbruchstelle im Inneren des Dübelkopfes ermöglicht ein leichtes Durchdringen der geschlossenen Dübelspitze am Kopf durch das Befestigungselement (insbesondere einer Schraube). Eine Mitdrehsicherung am Dübelfuß kann mit Vorteil aus einem harten Kunststoff ausgebildet werden, damit sich die Mitdrehsicherung in den Untergrund einschneiden kann. Rippen, welche ein Gewinde am Dübelkopf bilden können, können abgeschrägt ausgeführt werden. Dann können diese Rippen beim Spreizen des Dübels den äußeren Bereich der Dübelhülse dehnen, wodurch das Befestigungselement (insbesondere eine Schraube) leicht einzubringen (insbesondere einzuschrauben) ist.

Mit Vorteil kann gemäß exemplarischen Ausführungsbeispielen der Erfindung annähernd eine gesamte Dübelhülse ohne Verluste (herkömmlich verursacht durch Zwischenräume zwischen funktionalen Spreizstegen) für eine Spreizwirkung ausgenutzt werden. Ferner können durch den Einsatz von Spreizstegen aus hartem Kunststoff mit dünnen Bereichen zur Implementierung von Flexibilität hohe Auszugskräfte erreicht werden. Hohe Auszugskräfte können auch durch ein Verknoten von breiteren weichen Spreizstegen gefördert werden. Des Weiteren kann eine Volumenvergrößerung eines resultierenden Knotens durch Verschiebeelemente mit entsprechender Winkelstellung (vorteilhaft 45°) erreicht werden.

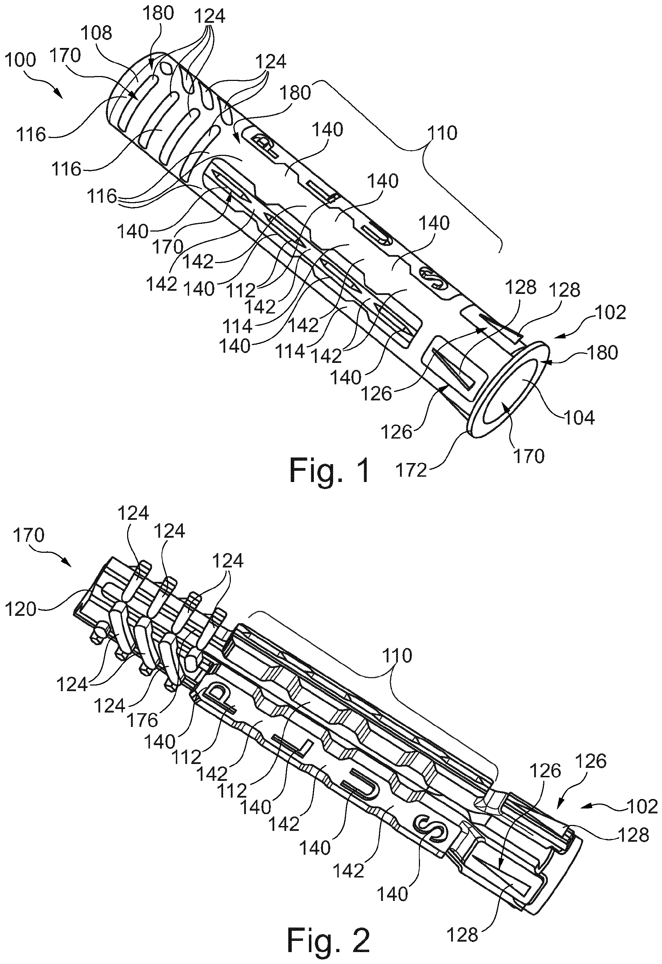

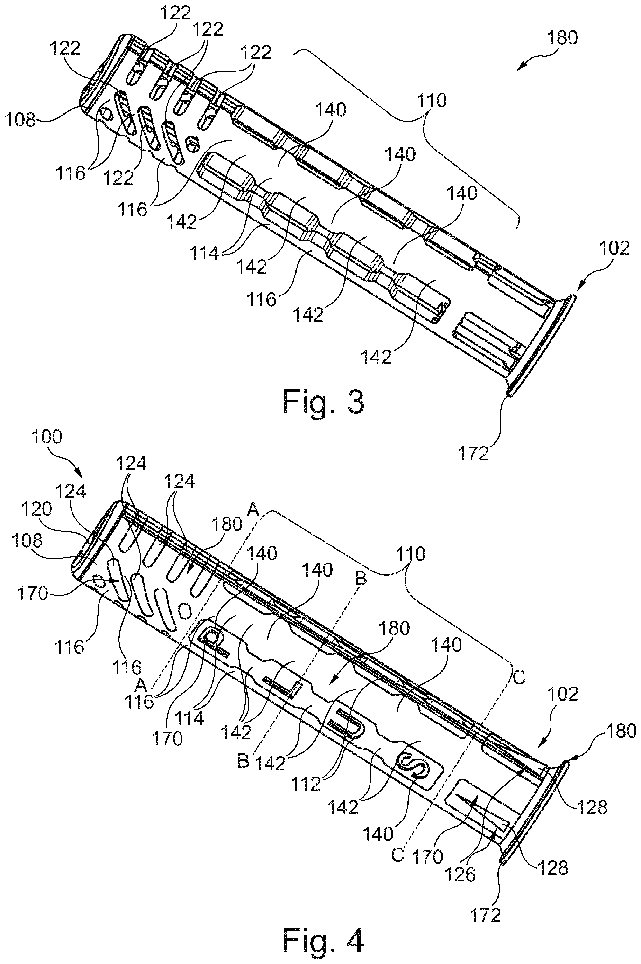

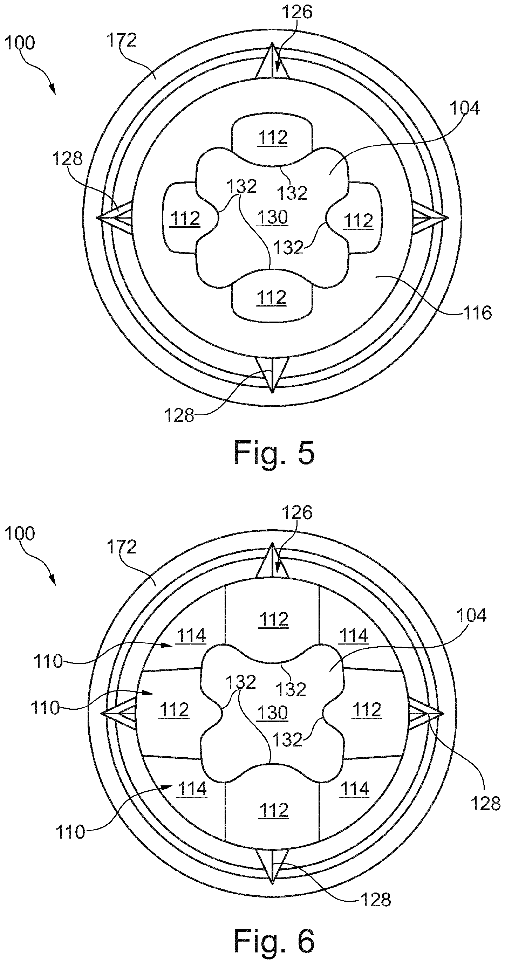

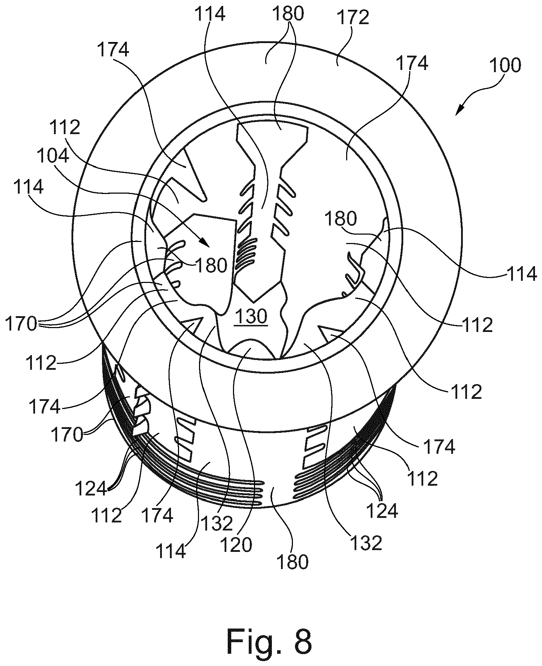

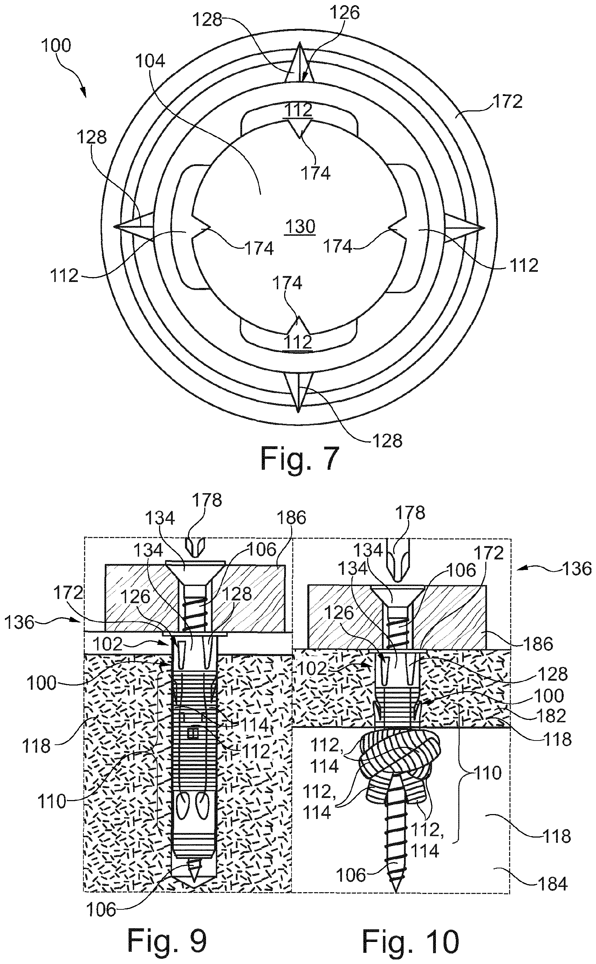

**Figur 1** zeigt eine dreidimensionale Ansicht eines Dübels 100 gemäß einem exemplarischen Ausführungsbeispiel der Erfindung, der aus zwei Spritzgusskomponenten 170, 180 entsprechend zweier getrennter Spritzgussverfahren aufgebaut ist. **Figur 2** zeigt eine erste Spritzgusskomponente 170 des Dübels 100 gemäß Figur 1 ohne die zweite Spritzgusskomponente 180. **Figur 3** zeigt die zweite Spritzgusskomponente 180 des Dübels 100 gemäß Figur 1 ohne die erste Spritzgusskomponente 170. **Figur 4** zeigt eine Seitenansicht des gesamten Dübels 100 gemäß Figur 1, d.h. mit beiden Spritzgusskomponenten 170, 180. **Figur 5** zeigt eine Schnittansicht des Dübels 100 gemäß Figur 1 bis Figur 4 entlang einer in Figur 4 dargestellten Schnittebene A-A. **Figur 6** zeigt eine Schnittansicht des Dübels 100 gemäß Figur 1 bis Figur 4 entlang einer in Figur 4 dargestellten Schnittebene B-B. **Figur 7** zeigt eine Schnittansicht des Dübels 100 gemäß Figur 1 bis Figur 4 entlang einer in Figur 4 dargestellten Schnittebene C-C. **Figur 8** zeigt eine räumliche Ansicht in ein Inneres des Dübels 100 gemäß Figur 1 bis Figur 7.

Der in Figur 1 bis Figur 8 dargestellte Dübel 100 ist als Kunststoffdübel ausgebildet, d.h. besteht ausschließlich aus Kunststoff. Kunststoffe der ersten Spritzgusskomponente 170 und der zweiten Spritzgusskomponente 180 können identisch oder unterschiedlich sein.

Der Dübel 100 weist als ersten Endabschnitt einen Fuß 102 mit einem außenseitigen ringförmigen Kragen 172 und einer Öffnung 104 zum Einführen eines vorzugsweise als Schraube ausgebildeten und in Figur 9 und Figur 10 dargestellten Befestigungselements 106 auf. Die Öffnung 104 an der Außenseite des Dübels 100 im Bereich des Fußes 102 mündet im Inneren des Dübels 100 in einen Aufnahmekanal 130 zum Aufnehmen des Befestigungselements 106 (vergleiche Figur 5 bis Figur 8). An seiner Außenseite hat der Fuß 102 eine Mitdrehsicherung 126 zum Vermeiden eines Mitdrehens des Dübels 100 bei einem drehenden Einbringen eines als Schraube ausgebildeten Befestigungselements 106 in die Öffnung 104 und nachfolgend in den Aufnahmekanal 130. Die Mitdrehsicherung 126 ist in dem dargestellten Ausführungsbeispiel durch vier in Umfangsrichtung außenseitig verteilt angeordnete und radial über eine Mantelfläche des Dübels 100 überstehende Dorne 128 (zum Beispiel aus Hartkunststoff) mit scharfen Schneidkanten ausgebildet. Diese Schneidkanten können sich nach Einführen des Dübels 100 in ein Bohrloch (oder dergleichen) in einem Untergrund 118 (siehe Figur 9 und Figur 10) in den Untergrund 118 eingraben und dadurch einen Verdrehschutz bewerkstelligen.

Ferner weist der Dübel 100 als zweiten Endabschnitt, der dem Fuß 102 gegenüberliegt, einen kappenförmigen Kopf 108 am Einsteckende des Dübels 100 auf. Der kappenförmige und daher an sich geschlossene Kopf 108 weist in einer distalen Stirnplatte eine Sollbruchstelle 120 in Form einer linienhaften und im dargestellten Ausführungsbeispiel kreuzförmig ausgebildeten mechanischen Schwächungslinie auf. Bei Einbringen eines Befestigungselements 106, insbesondere bei Einschrauben einer Schraube, in die Öffnung 104 bzw. den zugehörigen Aufnahmekanal 130 des Dübels 100 wird die Sollbruchstelle 120 von der Spitze des Befestigungselements 106 unter Öffnung der Stirnfläche des Kopfes 108 aufgebrochen. Anders ausgedrückt kann ein Ende des Befestigungselements 106 die Sollbruchstelle 120 definiert zerstören und dadurch durch den Kopf 108 des Dübels 100 hindurchtreten (vergleiche Figur 9 und Figur 10).

Ferner weist der Kopf 108 in einem hohlzylindrischen Abschnitt Dehnungsfugen 122 auf (siehe Figur 3), die mit Rippen 124 gefüllt sind (siehe Figur 1 und Figur 2). Die Rippen 124 sind aus demselben Material und in demselben Herstellungsverfahren ausgebildet wie die ersten Spreizstege 112. Ein Teil der Rippen 124 erstreckt sich orthogonal zu der Axialrichtung des Dübels 100. Ein anderer Teil der Rippen 124 in den Dehnungsfugen 122 verläuft in einem spitzen Winkel schräg zu der Axialrichtung des Dübels 100.

Darüber hinaus ist ein Spreizbereich 110 zwischen dem Fuß 102 und dem Kopf 108 angeordnet und mit einer Mehrzahl von in Umfangsrichtung bündig bzw. unmittelbar aneinander anliegenden, aber getrennten Spreizstegen 112, 114 versehen. Der Spreizbereich 110 ist jener Bereich des Dübels 100, der nach Einbringen des Dübels 100 in einen als Vollkörper ausgebildeten Untergrund 118 (siehe Figur 9) und nach Einbringen eines als Schraube ausgebildeten Befestigungselements 106 (siehe ebenfalls Figur 9) in die Öffnung 104 radial aufgeweitet wird und dabei aufspreizt. Hingegen erfährt weder der Fuß 102 noch der Kopf 108 bei der Montage des Dübels 100 samt Befestigungselement 106 eine Spreizung. Eine gewisse Spreizung am Kopf 108 des Dübels 100 entsteht durch das Einbringen des Befestigungselements 106, insbesondere einer Schraube.

Erste Spreizstege 112 der ersten Spritzgusskomponente 170 sind, wie in Figur 1 und Figur 2 dargestellt, zwar kopfseitig und fußseitig miteinander verbunden, sind jedoch nicht mit zweiten Spreizstegen 114 der zweiten Spritzgusskomponente 180 verbunden. Die zweiten Spreizstege 114 sind sowohl am Fuß 102 als auch am Kopf 108 miteinander verbunden und sind einstückig und einstoffig mit bzw. als Teil einer zusammenhängenden Matrix 116 ausgebildet, wie in Figur 1 und Figur 3 dargestellt.

Die ersten Spreizstege 112 und die zweiten Spreizstege 114 können wahlweise aus unterschiedlichen Materialien oder aus dem gleichen Material hergestellt sein, wobei diese Materialien in zwei getrennten und aufeinanderfolgenden Spritzgussverfahren zum Einsatz kommen. Im dargestellten Ausführungsbeispiel sind die ersten Spreizstege 112 flexibler ausgebildet als die zweiten Spreizstege 114. Anders ausgedrückt sind die zweiten Spreizstege 114 im Vergleich zu den ersten Spreizstegen 112 rigider ausgebildet. Zum Beispiel können die zweiten Spreizstege 114 aus einem Hartkunststoff oder einem faserverstärkten Kunststoff hergestellt sein. Die ersten Spreizstege 112 hingegen können aus einem Weichkunststoff hergestellt sein, zum Beispiel Polyethylen.

Wie in Figur 1 und Figur 6 zu erkennen, sind die ersten Spreizstege 112 und die zweiten Spreizstege 114 in Umfangsrichtung alternierend angeordnet. Im dargestellten Ausführungsbeispiel gibt es vier erste Spreizstege 112 und vier zweite Spreizstege 114, wobei eine andere Anzahl erster Spreizstege 112 bzw. zweiter Spreizstege 114 möglich ist. Die ersten Spreizstege 112 und die zweiten Spreizstege 114 sind zueinander mit Berührkontakt und formschlüssig ausgebildet, aber bilden voneinander getrennte Körper, die auch getrennt voneinander aufspreizen können. Zum Beispiel Figur 6 kann entnommen werden, dass der Spreizbereich 110 in Umfangsrichtung spaltfrei geschlossen ist. Dies wird erreicht, indem jeweils benachbarte erste Spreizstege 112 und zweite Spreizstege 114 aneinander mit physischem Kontakt anliegen, ohne dazwischen Zwischenräume oder Schlitze zu bilden. Anschaulich ist mittels Spritzgießens eine zusammenhängende Matrix 116 gebildet, welche auch die zweiten Spreizstege 114 enthält. Die ersten Spreizstege 112 bilden nicht Teil der Matrix 116, sind aber abschnittsweise in Aussparungen der Matrix 116 positioniert.

Figur 1 und Figur 4 kann entnommen werden, dass die ersten Spreizstege 112 und die zweiten Spreizstege 114 miteinander verzahnt sind. Zueinander invers geformte Zahnstrukturen der Spreizstege 112, 114 sind derart konfiguriert, dass in Axialrichtung (die einer Einführrichtung eines Befestigungselements 106 in die Öffnung 104 des Dübels 100 entspricht und senkrecht zu einer Papierebene gemäß Figur 5 bis Figur 7 verläuft) des Dübels 100 abwechselnd breitere Abschnitte 140 und schmälere Abschnitte 142 gebildet sind. Dies ist zum Beispiel in Figur 4 zu erkennen.

Im Spreizbereich 110 und gegebenenfalls im Kopf 108, vorzugsweise jedoch nicht im Bereich des Fußes 102, ist ein hohler und sich an die Öffnung 104 anschließender Aufnahmekanal 130 zum Aufnehmen eines Befestigungselements 106 im Inneren des Dübels 100 ausgebildet. Wie am besten in Figur 6 dargestellt, hat der Aufnahmekanal 130 mehrere innenseitig hineinragende Überstände 132, die als innenseitige Endbereiche der ersten Spreizstege 112 ausgebildet sind. Wird das Befestigungselement 106 in die Öffnung 104 und nachfolgend den Aufnahmekanal 130 eingeführt, drückt das Befestigungselement 106 die Überstände 132 radial nach außen, wodurch die ersten Spreizstege 112 und dann auch die zweiten Spreizstege 114 nach außen auf eine Bohrlochwandung in dem Untergrund 118 aufgespreizt und aufgepresst werden.

Figur 2 zeigt anschaulich das Ergebnis des ersten Spritzgussprozesses, mit dem die erste Spritzgusskomponente 170 gefertigt wird. In Figur 2 ist zu erkennen, dass die vier ersten Spreizstege 112 am Kopf 108 und am Fuß 112 miteinander verbunden sind. Eine Verbindungsstruktur 176 dient als Füllmaterial bei einer Verwendung des Dübels 100 als Vollbaustoffeinsatz und bildet teilweise einen Rand bzw. eine Unterlage für einen nachfolgenden zweiten Spritzgussprozess.

Figur 3 stellt die zweite Spritzgusskomponente 180 als Ergebnis des zweiten Spritzgussprozesses isoliert dar, d.h. ohne Darstellung der ersten Spritzgusskomponente 170. Die vier zweiten Spreizstege 114 sind ebenfalls am Kopf 108 und am Fuß 112 miteinander verbunden, nicht aber mit den ersten Spreizstegen 112. Figur 3 zeigt die Dehnungsfugen 122, die sowohl ein radiales Aufspreizen fördern als auch ein leichteres Einbringen einer Schraube als Befestigungselement 106 ermöglichen. Ein Teil dieser Dehnungsfugen 122 ist schräg zu einer Axialrichtung des Dübels 100 ausgerichtet, was eine Aufweitung im Durchmesser ermöglicht. Entsprechende Stege können beim Einschrauben in axialer Richtung geformt werden.

Der in Figur 4 dargestellte fertige Dübel 100 enthält die ersten Spreizstege 112 als Teil der ersten Spritzgusskomponente 170 und die zweiten Spreizstege 114 als Teil der anderen zweiten Spritzgusskomponente 180. Zwischen den ersten Spreizstegen 112 und den zweiten Spreizstegen 114 ist keine mechanische Verbindung gebildet.

Zum Herstellen des Dübels 100 kann zunächst die erste Spritzgusskomponente 170 gemäß Figur 2 durch ein erstes Spritzgussverfahren unter Verwendung eines ersten Spritzgusswerkzeugs hergestellt werden. Dabei werden auch die ersten Spreizstege 112 gebildet. Nachfolgend kann die zweite Spritzgusskomponente 180 gemäß Figur 3 durch einen zweites Spritzgussverfahren unter Verwendung eines zweiten Spritzgusswerkzeugs hergestellt werden, wodurch auch die zweiten Spreizstege 114 gebildet werden. Hierbei kann die erste Spritzgusskomponente 170 durch die zweite Spritzgusskomponente 180 überspritzt werden. Als Ergebnis werden die Spreizstege 112, 114 enthalten, die zwar mit Berührkontakt aneinander anliegen, aber getrennte Körper sind, die bei Einbringen eines Befestigungselements 106 in den Dübel 100 auch getrennt voneinander aufspreizen können.

In Figur 7 und in Figur 8 zu erkennen sind Spreizdorne 174 an den ersten Spreizstegen 112. Die Spreizdorne 174 erstrecken sich in die Öffnung 104 bzw. bis in den Aufnahmekanal 130 hinein.

**Figur 9** zeigt schematisch einen Dübel 100 gemäß einem exemplarischen Ausführungsbeispiel der Erfindung (zum Beispiel den in Figur 1 bis Figur 8 gezeigten Dübel 100), bei dem die Spreizstege 112, 114 in einem als Vollkörper ausgebildeten Untergrund 118 aufgespreizt sind.

Genauer gesagt stellt Figur 9 eine Montageanordnung 136 gemäß einem exemplarischen Ausführungsbeispiel der Erfindung dar, die einen als Vollkörper (zum Beispiel Vollbeton) ausgebildeten Untergrund 118 und ein Montagekit 134 gemäß einem exemplarischen Ausführungsbeispiel der Erfindung zeigen. Das Montagekit 134 enthält den bezugnehmend auf Figur 1 bis Figur 8 beschriebenen Dübel 100 und eine Metallschraube als Befestigungselement 106 zum Einführen in den Dübel 100.

Zum Montieren des Dübels 100 in dem als Vollkörper ausgebildeten Untergrund 118 wird in dem Untergrund 118 zunächst ein Sackloch gebohrt. Danach wird, beispielsweise händisch oder mittels eines nicht dargestellten Hammers, der Dübel 100 in das Sackloch eingeführt. Nachfolgend wird mittels eines Schraubendrehers 178 das als Schraube ausgebildete Befestigungselement 106 in die Öffnung 104 und dann in den Aufnahmekanal 130 eingeschraubt. Dadurch erfolgt ein vollumfängliches und in Umfangsrichtung lückenloses Aufspreizen der Spreizstege 112, 114 des Dübels 100 gegen die Wandung des Sacklochs. Wie oben beschrieben, sind die Spreizstege 112, 114 ausgebildet, bei Einführen des Befestigungselements 106 in den als Vollkörper ausgebildeten Untergrund 118 gemeinsam aufzuspreizen.

Durch das oben beschriebene Herstellungsverfahren bzw. die Eigenschaften des Dübels 100 verbleiben im Spreizbereich 110 keine Hohlräume ohne Kunststoff zwischen Befestigungselement 106 und der Wandung des Sacklochs. Da sich solche Hohlräume auf das Spreizverhalten negativ auswirken, können mit dem beschriebenen Dübel 100 und dem zugehörigen Setzverfahren hohe Auszugskräfte erhalten werden.

Gemäß Figur 9 werden der Dübel 100 und das Befestigungselement 106 verwendet, um ein Anbauteil 186 an dem Untergrund 118 zu montieren.

**Figur 10** zeigt denselben Dübel 100 wie gemäß Figur 9 in einem Betriebszustand, in dem die Spreizstege 112, 114 in einem als Hohlkörper ausgebildeten anderen Untergrund 118 verknotet sind. Wenn nämlich der Untergrund 118, in den der Dübel 100 gesetzt wird, ein Hohlkörper ist, verknoten die Spreizstege 112, 114 des Dübels 100 in einem Hohlraum 184 des Hohlkörpers. Im dargestellten Ausführungsbeispiel ist der Untergrund 118 aus einer Platte 182 (zum Beispiel aus Gips oder Holz) gebildet, hinter der ein Hohlraum 184 angeordnet ist.

Somit ist der Dübel 100 ausgebildet, bei Eindrehen des Befestigungselements 106 in den als Hohlkörper ausgebildeten Untergrund 118 die Spreizstege 112, 114 des eingeführten Dübel 100 miteinander zu verknoten, wenn die Spreizstege 112, 114 in den Hohlraum 184 hinter der Platte 186 eindringen.

Der als Kunststoffdübel ausgebildete Dübel 100 gemäß Figur 1 bis Figur 8 ermöglicht somit wahlweise eine Verankerung durch Verspreizen in Vollbaustoffen (siehe Figur 9) und durch Verknoten in Hohlbaustoffen oder Plattenmaterialien (siehe Figur 10). Gleichzeitig gilt, dass harte und/oder steife Kunststoffe besonders gut für ein Verspreizen dienen und weiche und/oder elastische Kunststoffe besonders wirksam ein Verknoten fördern. Dicke Spreizstege 112 bzw. 114 mit großer Anlagefläche sind optimal für Vollbaustoffe. Hingegen sind dünne Spreizelemente 112 bzw. 114 besonders gut zum leichten Verknoten in Hohlbaustoffen geeignet.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Dübel (100), aufweisend:
einen Fuß (102) mit einer Öffnung (104) zum Einführen eines Befestigungselements (106);
einen Kopf (108); und
einen Spreizbereich (110) zwischen dem Fuß (102) und dem Kopf (108) mit einer Mehrzahl von in Umfangsrichtung bündig aneinander anliegenden, aber getrennten ersten und zweiten Spreizstegen (112, 114);
wobei zumindest ein Teil der Spreizstege (112, 114) in Axialrichtung des Dübels (100) alternierend breitere Abschnitte (140) und schmälere Abschnitte (142) aufweist, die durch Zahnstrukturen gebildet sind, durch welche die ersten Spreizstege (112) und die zweiten Spreizstege (114) miteinander verzahnt sind.

2. Dübel (100) gemäß Anspruch 1, wobei die ersten Spreizstege (112) am Fuß (102) und/oder am Kopf (108) miteinander verbunden sind und/oder wobei die zweiten Spreizstege (114) am Fuß (102) und/oder am Kopf (108) miteinander verbunden sind.

3. Dübel (100) gemäß Anspruch 2, aufweisend zumindest eines der folgenden Merkmale:
wobei die ersten Spreizstege (112) nicht mit den zweiten Spreizstegen (114) verbunden sind, insbesondere nicht am Kopf (108) und/oder nicht am Fuß (102) und/oder nicht zwischen Kopf (108) und Fuß (102);
wobei die ersten Spreizstege (112) und die zweiten Spreizstege (114) aus unterschiedlichen Materialien oder aus dem gleichen Material hergestellt sind;
wobei die ersten Spreizstege (112) und die zweiten Spreizstege (114) in Umfangsrichtung alternierend angeordnet sind;
wobei die ersten Spreizstege (112) und die zweiten Spreizstege (114) zueinander formschlüssig ausgebildet sind;
wobei die ersten Spreizstege (112) dünner und aus einem festeren Material als die zweiten Spreizstege (114) ausgebildet sind oder die zweiten Spreizstege (114) dünner und aus einem festeren Material als die ersten Spreizstege (112) ausgebildet sind;
wobei die ersten Spreizstege (112) Teil einer ersten Spritzgusskomponente (170) des Dübels (100) sind und die zweiten Spreizstege (114) Teil einer zweiten Spritzgusskomponente (180) des Dübels (100) sind;
wobei die ersten Spreizstege (112) und die zweiten Spreizstege (114) eine unterschiedliche Flexibilität oder Elastizität aufweisen;
wobei die ersten Spreizstege (112) zumindest abschnittsweise von einer zusammenhängenden Matrix (116), welche auch die zweiten Spreizstege (114) aufweist, umfänglich umgeben sind.

4. Dübel (100) gemäß einem der Ansprüche 1 bis 3, wobei der Spreizbereich (110) in Umfangsrichtung, insbesondere entlang einer gesamten axialen Länge des Spreizbereichs (110), spaltfrei geschlossen ist.

5. Dübel (100) gemäß einem der Ansprüche 1 bis 4, wobei die Spreizstege (112, 114) ausgebildet sind, bei Einführen eines Befestigungselements (106) in den, in einen als Vollkörper ausgebildeten Untergrund (118) eingeführten, Dübel (100) gemeinsam aufzuspreizen.

6. Dübel (100) gemäß einem der Ansprüche 1 bis 5, wobei die Spreizstege (112, 114) ausgebildet sind, bei Einführen eines Befestigungselements (106) in den, in einen als Hohlkörper ausgebildeten Untergrund (118) eingeführten, Dübel (100) miteinander zu verknoten.

7. Dübel (100) gemäß einem der Ansprüche 1 bis 6, wobei der Kopf (108) geschlossen ist, wobei insbesondere der Kopf (108) eine Sollbruchstelle (120) aufweist, die bei Einbringen eines Befestigungselements (106) in den Dübel (100) unter Öffnung des Kopfes (108) aufbrechbar ist.

8. Dübel (100) gemäß einem der Ansprüche 1 bis 7, aufweisend zumindest eines der folgenden Merkmale:
wobei der Kopf (108) Dehnungsfugen (122) aufweist, die zumindest teilweise mit Rippen (124) gefüllt sind, wobei insbesondere zumindest ein Teil der Dehnungsfugen (122) schräg zu einer Axialrichtung des Dübels (100) verläuft;
wobei der Fuß (102) eine Mitdrehsicherung (126) aufweist, insbesondere ausgebildet als in Umfangsrichtung außenseitig verteilt angeordnete Dorne (128);
wobei zumindest im Spreizbereich (110) ein Aufnahmekanal (130) zum Aufnehmen eines Befestigungselements (106) im Inneren des Dübels (100) mehrere innenseitig hineinragende Überstände (132) aufweist, die als innenseitige Endbereiche von zumindest einem Teil der Spreizelemente (112, 114) ausgebildet sind;
wobei der Kopf (108) und/oder der Fuß (102) ausgebildet ist oder sind, dass dort bei Einführen eines Befestigungselements (106) keine Spreizung erfolgt.

9. Verfahren zum Herstellen eines Dübels (100), wobei das Verfahren aufweist:
Bilden eines Fußes (102) mit einer Öffnung (104) zum Einführen eines Befestigungselements (106);
Bilden eines Kopfs (108); und
Bilden eines Spreizbereichs (110) zwischen dem Fuß (102) und dem Kopf (108) mit einer Mehrzahl von in Umfangsrichtung bündig aneinander anliegenden, aber getrennten ersten und zweiten Spreizstegen (112, 114);
wobei zumindest ein Teil der Spreizstege (112, 114) in Axialrichtung des Dübels (100) alternierend breitere Abschnitte (140) und schmälere Abschnitte (142) aufweist, die durch Zahnstrukturen gebildet werden, durch welche die ersten Spreizstege (112) und die zweiten Spreizstege (114) miteinander verzahnt werden.

10. Verfahren gemäß Anspruch 9, wobei das Verfahren ein Herstellen der Spreizstege (112, 114) aufweist, bei dem:
zunächst die ersten Spreizstege (112) gebildet werden; und
nachfolgend die zweiten Spreizstege (114) gebildet werden

11. Verfahren gemäß Anspruch 10, aufweisend zumindest eines der folgenden Merkmale:
wobei bei dem Verfahren die ersten Spreizstege (112) mittels eines ersten Spritzgussverfahrens und nachfolgend die zweiten Spreizstege (114) mittels eines zweiten Spritzgussverfahrens hergestellt werden;
wobei bei dem Verfahren die ersten Spreizstege (112) mittels eines ersten Werkzeugs und nachfolgend die zweiten Spreizstege (114) mittels eines anderen zweiten Werkzeugs hergestellt werden.

12. Verfahren zum Montieren eines Dübels (100) gemäß einem der Ansprüche 1 bis 8 in einem Untergrund (118), wobei das Verfahren aufweist:
wenn der Untergrund (118) ein Vollkörper ist, vollumfängliches Aufspreizen der Spreizstege (112, 114) des Dübels (100);
wenn der Untergrund (118) ein Hohlkörper ist, Verknoten der Spreizstege (112, 114) des Dübels (100) in mindestens einem Hohlraum (184) des Hohlkörpers.

13. Montagekit (134), aufweisend:
einen Dübel (100) gemäß einem der Ansprüche 1 bis 8; und
ein Befestigungselement (106) zum Einführen in den Dübel (100).

14. Montageanordnung (136), aufweisend:
ein Montagekit (134) gemäß Anspruch 13; und
einen Untergrund (118);
wobei der Dübel (100) in den Untergrund (118) eingeführt ist und das Befestigungselement (106) in den Dübel (100) eingeführt ist.

15. Montageanordnung (136) nach Anspruch 14, aufweisend zumindest eines der folgenden Merkmale:
wobei die Spreizstege (112, 114) des Dübels (100) vollumfänglich aufgespreizt sind und der Untergrund (118) ein Vollkörper ist;
wobei die Spreizstege (112, 114) des Dübels (100) in einem Hohlraum (184) des als Hohlkörper ausgebildeten Untergrunds (118) verknotet sind.

## Claims

1. A wall plug (100), comprising:
a foot (102) with an opening (104) for inserting a fixing element (106);
a head (108); and
a strutting region (110) between the foot (102) and the head (108) with a plurality of in a circumferential direction flush abutting but separate first and second strutting bars (112, 114);
wherein at least a part of the strutting bars (112, 114) comprises in an axial direction of the wall plug (100) in an alternating manner broader sections (140) and narrower sections (142), which are formed by tooth structures, by which the first strutting bars (112) and the second strutting bars (114) are teethed with one another.

2. The wall plug (100) according to claim 1, wherein the first strutting bars (112) are connected together at the foot (102) and/or the head (108) and/or wherein the second strutting bars (114) are connected together at the foot (102) and/or the head (108).

3. The wall plug (100) according to claim 2, comprising at least one of the following features:
wherein the first strutting bars (112) are not connected with the second strutting bars (114), in particular not at the head (108) and/or not at the foot (102) and/or not between head (108) and foot (102);
wherein the first strutting bars (112) and the second strutting bars (114) are made of different materials or of the same material;
wherein the first strutting bars (112) and the second strutting bars (114) are arranged in a circumferential direction in an alternating manner;
wherein the first strutting bars (112) and the second strutting bars (114) are formed form-fit;
wherein the first strutting bars (112) are formed narrower and from a firmer material than the second strutting bars (114) or the second strutting bars (114) are formed narrower and from a firmer material than the first strutting bars (112);
wherein the first strutting bars (112) are part of a first injection molding component (170) of the wall plug (100) and the second strutting bars (114) are part of second injection molding component (170) of the wall plug (100);
wherein the first strutting bars (112) and the second strutting bars (114) comprise a different flexibility and elasticity;
wherein the first strutting bars (112) are at least in sections circumferentially surrounded by a coherent matrix (116), which also comprises the second strutting bars (114).

4. The wall plug (100) according to one of the claims 1 to 3, wherein the strutting region (110) is closed in a gap-free manner in a circumferential direction, in particular along an entire axial length of the strutting region (110).

5. The wall plug (100) according to one of the claims 1 to 4, wherein the strutting bars (112, 114) are formed to strut jointly upon inserting a fixing element (106) into the wall plug (100), which is inserted into a substrate formed as solid body.

6. The wall plug (100) according to one of the claims 1 to 5, wherein the strutting bars (112, 114) are formed to form knots with each other, upon inserting a fixing element (106) into the wall plug (100) inserted into a substrate formed as solid body.

7. The wall plug (100) according to one of the claims 1 to 6, wherein the head (108) is closed, wherein in particular the head (108) comprises a predetermined breaking point (120), which is breakable open upon inserting a fixing element (106) into the wall plug (100) under opening the head (108).

8. The wall plug (100) according to one of the claims 1 to 7, comprising at least one of the following features:
wherein the head (108) has expansion gaps (122) which are at least partially filled with ribs (124), wherein in particular at least a part of the expansion gaps (122) runs inclined to an axial direction of the wall plug (100);
wherein the foot (102) comprises an co-rotation locking device (126), in particular formed as mandrels (128) distributed at the outside in a circumferential direction;
wherein at least in the strutting region (110) a receiving channel (130) for receiving a fixing element (106) inside the wall plug (100) comprises a plurality of protrusions (132) projecting into the inside, which are formed as inside end regions of at least a part of the strutting elements (112, 114);
wherein the head (108) and/or the foot (102) is or are formed, that upon inserting a fixing element (106) no strutting occurs there.

9. A method for manufacturing a wall plug (100), the method comprising
forming a foot (102) with an opening (104) for inserting a fixing element (106) ;
forming a head (108); and
forming a strutting area (110) between the foot (102) and the head (108) with a plurality of in a circumferential direction flush abutting but separate first and second strutting bars (112, 114);
wherein at least a part of the strutting bars (112, 114) comprises in an axial direction of the wall plug (100) in an alternating manner broader sections (140) and narrower sections (142), which are formed by tooth structures, by which the first strutting bars (112) and the second strutting bars (114) are teethed with one another.

10. The method according to claim 9, wherein the method comprises a manufacturing of the strutting bars (112, 114), during which:
first the first strutting bars (112) are formed; and
subsequently the second strutting bars (114) are formed.

11. The method according to claim 10, comprising at least one of the following featu res:
wherein with the method the first strutting bars (112) are manufactured by means of a first injection molding process and subsequently the second strutting bars (114) are manufactured by means of a second injection molding process;
wherein with the method, the first strutting bars (112) are manufactured by means of a first tool and subsequently the second strutting bars (114) are manufactured by means of a second tool.

12. A method for mounting a wall plug (100) according to one of the claims 1 to 8 in a substrate (118), wherein the method comprises:
when the substrate (118) is a solid body, fully circumferentially strutting of the strutting bars (112, 114) of the wall plug (100);
when the substrate (118) is a hollow body, knotting the strutting bars (1129, 114) of the wall plug (100) in at least one hollow space (184) of the hollow body.

13. Mounting kit (134), comprising:
a wall plug (100) according to one of the claims 1 to 8; and
a fixing element (106) for inserting into the wall plug (100).

14. Mounting arrangement (136), comprising:
a mounting kit (134) according to claim 13; and
a substrate (118);
wherein the wall plug (100) is inserted into the substrate (118) and the fixing element (106) is inserted into the wall plug (100).

15. Mounting arrangement (136) according to claim 14, comprising at least one of the following features:
wherein the strutting bars (112, 114) of the wall plug (100) are strutted fully circumferentially and the substrate (118) is a solid body;
wherein the strutting bars (112, 114) of the wall plug (100) are knotted in a hollow space (184) of the substrate (118) formed as a hollow body.

## Revendications

1. Cheville (100), comprenant :
une base (102) ayant une ouverture (104) pour l'insertion d'un élément de fixation (106) ;
une tête (108) ; et
une zone d'expansion (110) entre la base (102) et la tête (108) présentant une pluralité de premières et de deuxièmes barrettes d'expansion (112, 114) affleurant circonférentiellement mais séparées ;
au moins certaines des barrettes d'expansion (112, 114) présentant alternativement des parties plus larges (140) et des parties plus étroites (142) dans la direction axiale de la cheville (100), qui sont formées par des structures dentées par lesquelles les premières barrettes d'expansion (112) et les deuxièmes barrettes d'expansion (114) sont imbriquées les unes avec les autres.

2. Cheville (100) selon la revendication 1, dans laquelle les premières barrettes d'expansion (112) sont reliées entre elles au niveau de la base (102) et/ou de la tête (108) et/ou dans laquelle les deuxièmes barrettes d'expansion (114) sont reliées entre elles au niveau de la base (102) et/ou de la tête (108).

3. Cheville (100) selon la revendication 2, présentant au moins une des caractéristiques suivantes :
les premières barrettes d'expansion (112) ne sont pas reliées aux deuxièmes barrettes d'expansion (114), en particulier ne sont pas reliées à la tête (108) et/ou pas reliées à la base (102) et/ou ne sont pas reliées entre la tête (108) et la base (102) ;
les premières barrettes d'expansion (112) et les deuxièmes barrettes d'expansion (114) sont faites de matériaux différents ou du même matériau ;
les premières barrettes d'expansion (112) et les deuxièmes barrettes d'expansion (114) sont disposées alternativement dans la direction circonférentielle ;
les premières barrettes d'expansion (112) et les deuxièmes barrettes d'expansion (114) sont formées selon des formes concordantes de l'une à l'autre ;
les premières barrettes d'expansion (112) sont plus minces et sont formées en un matériau plus ferme que les deuxièmes barrettes d'expansion (114) ou les deuxièmes barrettes d'expansion (114) sont plus minces et formées en un matériau plus ferme que les premières barrettes d'expansion (112) ;
les premières barrettes d'expansion (112) font partie d'un premier composant moulé par injection (170) de la cheville (100) et les deuxièmes barrettes d'expansion (114) font partie d'un deuxième composant moulé par injection (180) de la cheville (100) ;
les premières barrettes d'expansion (112) et les deuxièmes barrettes d'expansion (114) ont une flexibilité ou une élasticité différente ;
les premières barrettes d'expansion (112) sont entourées circonférentiellement, au moins par sections, par une matrice continue (116) qui comprend également les deuxièmes barrettes d'expansion (114).

4. Cheville (100) selon l'une des revendications 1 à 3, dans laquelle la zone d'expansion (110) est fermée dans la direction circonférentielle en étant dépourvue de fentes, en particulier sur toute une longueur axiale de la zone d'expansion (110).

5. Cheville (100) selon l'une des revendications 1 à 4, dans laquelle les barrettes d'expansion (112, 114) sont conçues de façon à s'écarter ensemble lorsqu'un élément de fixation (106) est inséré dans la cheville (100) elle-même insérée dans un substrat (118) conçue comme un corps plein.

6. Cheville (100) selon l'une des revendications 1 à 5, dans laquelle les barrettes d'expansion (112, 114) sont conçues pour se nouer ensemble lorsqu'un élément de fixation (106) est inséré dans la cheville (100) elle-même insérée dans un substrat (118) conçu comme un corps creux.

7. Cheville (100) selon l'une des revendications 1 à 6, dans laquelle la tête (108) est fermée, la tête (108) présentant en particulier un point de rupture (120) qui est apte à être rompu lorsqu'un élément de fixation (106) est inséré dans la cheville (100), par suite d'ouverture de la tête (108).

8. Cheville (100) selon l'une des revendications 1 à 7, présentant au moins l'une des caractéristiques suivantes :
la tête (108) présente des jointures d'allongement (122) qui sont au moins partiellement remplis de nervures (124), au moins une partie des jointures d'allongement (122) s'étendant notamment de façon oblique par rapport à une direction axiale de la cheville (100) ;
la base (102) présente un dispositif anti-rotation (126), notamment sous la forme d'épines (128) réparties à l'extérieur dans la direction circonférentielle ;
au moins dans la zone d'expansion (110), un conduit de réception (130) destiné à recevoir un élément de fixation (106) à l'intérieur de la cheville (100) présente une pluralité de saillies (132) faisant saillie à l'intérieur de la cheville (100), qui sont réalisées sous forme de zones d'extrémité intérieures d'au moins une partie des barrettes d'expansion (112, 114) ;
la tête (108) et/ou la base (102) est ou sont formées de telle sorte qu'aucun écartement ne se produise à cet endroit lorsqu'un élément de fixation (106) est inséré.

9. Procédé de fabrication d'une cheville (100), le procédé comprenant :
le fait de former une base (102) avec une ouverture (104) pour l'insertion d'un élément de fixation (106) ;
le fait de former une tête (108) ; et
le fait de former une zone d'expansion (110) entre la base (102) et la tête (108), ayant une pluralité de premières et de deuxièmes barrettes d'expansion (112, 114) affleurant circonférentiellement mais séparées ;
au moins certaines des barrettes d'expansion (112, 114) présentant alternativement des parties plus larges (140) et des parties plus étroites (142) dans la direction axiale de la cheville (100), qui sont formées par des structures dentées par lesquelles les premières barrettes d'expansion (112) et les deuxièmes barrettes d'expansion (114) sont imbriquées les unes avec les autres.

10. Procédé selon la revendication 9, ledit procédé comprenant la fabrication des barrettes d'expansion (112, 114), dans lequel :
les premières barrettes d'expansion (112) sont d'abord formées ; et
les deuxièmes barrettes d'expansion (114) sont ensuite formées.

11. Procédé selon la revendication 10, comprenant au moins une des caractéristiques suivantes :
les premières barrettes d'expansion (112) sont produites au moyen d'un premier procédé de moulage par injection et ensuite les deuxièmes barrettes d'expansion (114) sont produites au moyen d'un deuxième procédé de moulage par injection ;
les premières barrettes d'expansion (112) sont produites au moyen d'un premier outil et ensuite les deuxièmes barrettes d'expansion (114) sont produites au moyen d'un autre deuxième outil.

12. Procédé de montage d'une cheville (100) selon l'une quelconque des revendications 1 à 8 dans un substrat (118), le procédé comprenant :
lorsque le substrat (118) est un corps plein, les barrettes d'expansion (112, 114) de la cheville (100) se déploient entièrement ;
lorsque le substrat (118) est un corps creux, les barrettes d'expansion (112, 114) de la cheville (100) sont nouées dans au moins une cavité (184) du corps creux.

13. Kit de montage (134), comprenant :
une cheville (100) selon l'une des revendications 1 à 8 ; et
un élément de fixation (106) pour l'insertion dans la cheville (100).

14. Ensemble de montage (136) comprenant :
un kit de montage (134) selon la revendication 13 ; et
un substrat (118) ;
la cheville (100) étant insérée dans le substrat (118) et l'élément de fixation (106) est inséré dans la cheville (100).

15. Ensemble de montage (136) selon la revendication 14, comprenant au moins une des caractéristiques suivantes :
les barrettes d'expansion (112, 114) de la cheville (100) sont entièrement déployées et le substrat (118) est un corps plein ;
les barrettes d'expansion (112, 114) de la cheville (100) sont nouées dans une cavité (184) du substrat (118) sous la forme d'un corps creux.
